(19) Europäisches Patentamt
European Patent Office
Office européen des brevets

(11) EP 4 711 402 A1

(12) **EUROPEAN PATENT APPLICATION**
published in accordance with Art. 153(4) EPC

(43) Date of publication:
**18.03.2026 Bulletin 2026/12**

(21) Application number: **25782135.5**

(22) Date of filing: **19.03.2025**

(51) International Patent Classification (IPC):
***C08J 3/12*** *(2006.01)* ***C08G 59/68*** *(2006.01)*
***C08K 7/02*** *(2006.01)* ***C08L 63/00*** *(2006.01)*

(52) Cooperative Patent Classification (CPC):
**C08G 59/68; C08J 3/12; C08K 7/02; C08L 63/00**

(86) International application number:
**PCT/JP2025/010687**

(87) International publication number:
**WO 2025/211171 (09.10.2025 Gazette 2025/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.04.2024 JP 2024058574**

(71) Applicant: **Sumitomo Bakelite Co.Ltd.**
**Shinagawa-ku**
**Tokyo 140-0002 (JP)**

(72) Inventors:
- **MOCHIZUKI, Shunsuke**
  **Tokyo 140-0002 (JP)**
- **KUWABARA, Toshihisa**
  **Tokyo 140-0002 (JP)**

(74) Representative: **Müller-Boré & Partner**
**Patentanwälte PartG mbB**
**Friedenheimer Brücke 21**
**80639 München (DE)**

(54) **TABLET-SHAPED EPOXY RESIN MOLDING MATERIAL, COLUMNAR TABLET, AND METHOD FOR PRODUCING COLUMNAR TABLET**

(57) A tablet-shaped epoxy resin molding material of the present invention contains an epoxy resin, and a fibrous or acicular filler, in which a cross-sectional area is equal to or more than 3 $cm^2$ and equal to or less than 100 $cm^2$, and in a case where a specific gravity, a mass, and a volume of the tablet-shaped epoxy resin molding material, which are measured in accordance with JIS 6911:2006, are respectively denoted by G, M (g), and V ($cm^3$), a compression rate calculated from $[(M/G)/V] \times 100$ satisfies equal to or more than 70% and equal to or less than 95%.

FIG. 1

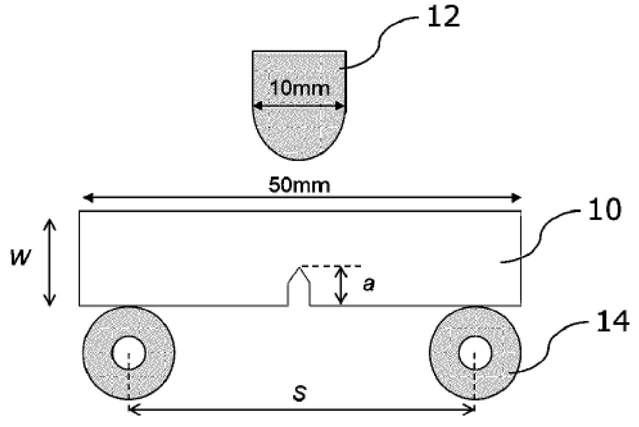




Processed by Luminess, 75001 PARIS (FR)

## Description

### TECHNICAL FIELD

The present invention relates to a tablet-shaped epoxy resin molding material, a columnar tablet, and a method for producing a columnar tablet.

### BACKGROUND ART

Various developments have been made so far on a molding method for a tablet-shaped epoxy resin molding material. As this kind of technology, for example, the technology described in Patent Document 1 is known. Patent Document 1 describes a method for transfer-molding a tablet-shaped epoxy resin composition in which an inorganic filler such as quartz glass powder, talc, silica powder, alumina powder, or calcium carbonate is blended, in order to encapsulate a semiconductor element (claim 1, paragraphs 0005, 0030, and the like of Patent Document 1).

### RELATED DOCUMENT

### PATENT DOCUMENT

[Patent Document 1] Japanese Unexamined Patent Publication No. H9-208805

### SUMMARY OF THE INVENTION

### TECHNICAL PROBLEM

However, as a result of studies conducted by the present inventors, it has been found that there is room for improvement in the tablet-shaped epoxy resin molding material described in Patent Document 1 in terms of damageability during transportation and fracture toughness.

### SOLUTION TO PROBLEM

As a result of further studies, the present inventors have found that by reducing a compression rate of the tablet-shaped epoxy resin molding material to an appropriate value, a molded body having excellent damageability during transportation and fracture toughness can be molded, and have completed the present invention.

According to an aspect of the present invention, the following tablet-shaped epoxy resin molding material, columnar tablet, and method for producing a columnar tablet are provided.

1. A tablet-shaped epoxy resin molding material containing:

   an epoxy resin; and
   a fibrous or acicular filler,
   in which a cross-sectional area is equal to or more than 3 $cm^2$ and equal to or less than 100 $cm^2$, and
   in a case where a specific gravity, a mass, and a volume of the tablet-shaped epoxy resin molding material, which are measured in accordance with JIS 6911:2006, are respectively denoted by G, M (g), and V ($cm^3$), a compression rate calculated from $[(M/G)/V] \times 100$ is equal to or more than 70% and equal to or less than 95%.

2. The tablet-shaped epoxy resin molding material according to 1.,

   in which a volume average fiber length of the fibrous or acicular filler, which is measured by the following procedure A, is equal to or more than 5 $\mu$m and equal to or less than 500 $\mu$m.
   (procedure A)
   The tablet-shaped epoxy resin molding material is dissolved in acetone to remove a resin component, subsequently insoluble components are dispersed on a glass plate, an image of the filler in the insoluble components is captured using an optical microscope, and a fiber length is measured using an image analyzer. An average value of fiber lengths of 100 pieces of the filler that is based on a volume of fibers, starting from a longest fiber length, is defined as the volume average fiber length.

3. The tablet-shaped epoxy resin molding material according to 1. or 2.,

in which in a case where a volume average fiber length of the fibrous or acicular filler, which is measured by the following procedure A, is denoted by L and a number average fiber diameter of the fibrous or acicular filler, which is measured by the following procedure B, is denoted by D,
L/D is equal to or more than 3 and equal to or less than 100.
(procedure A)
The tablet-shaped epoxy resin molding material is dissolved in acetone to remove a resin component, subsequently insoluble components are dispersed on a glass plate, an image of the filler in the insoluble components is captured using an optical microscope, and a fiber length is measured using an image analyzer. An average value of fiber lengths of 100 pieces of the filler that is based on a volume of fibers, starting from a longest fiber length, is defined as the volume average fiber length.
(procedure B)
100 transverse cross sections of the fibrous filler are measured from a transverse cross section of the tablet-shaped epoxy resin molding material using a scanning electron microscope, and an average of minimum diameters of respective fiber cross-sections is defined as the number average fiber diameter.

4. The tablet-shaped epoxy resin molding material according to any one of 1. to 3.,
in which the fibrous or acicular filler includes one or two or more selected from the group consisting of a wollastonite fiber, a glass fiber, a metal fiber, a carbon fiber, fibrous aluminum oxide, an aramid fiber, a silicon carbide whisker, a silicon nitride whisker, and a potassium titanate whisker.
5. The tablet-shaped epoxy resin molding material according to any one of 1. to 4.,

in which a spiral flow measured according to the following procedure is equal to or more than 20 cm.
(procedure)
The tablet-shaped epoxy resin molding material is injected into a mold for spiral flow measurement according to EMMI-1-66 using a low-pressure transfer molding machine under conditions of a mold temperature of 175°C, an injection pressure of 6.9 MPa, and a curing time of 120 seconds, and a flow length (cm) is measured.

6. The tablet-shaped epoxy resin molding material according to any one of 1. to 5.,
in which a content of the fibrous or acicular filler is equal to or more than 5% by mass and equal to or less than 80% by mass in 100% by mass of the tablet-shaped epoxy resin molding material.
7. The tablet-shaped epoxy resin molding material according to any one of 1. to 6.,
in which the epoxy resin includes a cresol novolac type epoxy resin and/or a bisphenol A type epoxy resin.
8. The tablet-shaped epoxy resin molding material according to any one of 1. to 7., further containing:
one or two or more curing catalysts selected from the group consisting of an amine-based catalyst and a phosphorus-based catalyst.
9. The tablet-shaped epoxy resin molding material according to any one of 1. to 8.,
in which the volume of the tablet-shaped epoxy resin molding material is equal to or more than 5 $cm^3$ and equal to or less than 1500 $cm^3$.
10. The tablet-shaped epoxy resin molding material according to any one of 1. to 9.,
in which the tablet-shaped epoxy resin molding material is used for any one of magnet fixing, electronic control unit encapsulation, coil encapsulation, or stator core encapsulation.
11. A columnar tablet which is molded from the tablet-shaped epoxy resin molding material according to any one of 1. to 10.
12. A method for producing a columnar tablet, the method including:

a step of melt-kneading an epoxy resin composition containing an epoxy resin and a fibrous or acicular filler to obtain an epoxy resin molding material; and
a step of obtaining a columnar tablet using the obtained epoxy resin molding material,
in which a cross-sectional area of the columnar tablet is equal to or more than 3 $cm^2$ and equal to or less than 100 $cm^2$, and
in a case where a specific gravity, a mass, and a volume of the columnar tablet, which are measured in accordance with JIS 6911:2006, are respectively denoted by G, M (g), and V ($cm^3$), a compression rate calculated from $[(M/G)/V] \times 100$ is equal to or more than 70% and equal to or less than 95%.

ADVANTAGEOUS EFFECTS OF INVENTION

According to the present invention, the tablet-shaped epoxy resin molding material, the columnar tablet, and the method for producing a columnar tablet which can mold a molded body having excellent damageability during transportation and fracture toughness are provided.

BRIEF DESCRIPTION OF THE DRAWINGS

FIG. 1 is a cross-sectional view illustrating an outline of a tensile compression tester.

DESCRIPTION OF EMBODIMENTS

Hereinafter, embodiments of the present invention will be described with reference to the drawings. In all the drawings, the same components are denoted by the same reference numerals, and description thereof will not be repeated. In addition, the drawings are schematic diagrams and do not correspond to the actual dimensional ratios.

An outline of the tablet-shaped epoxy resin molding material of the present embodiment will be described.

A tablet-shaped epoxy resin molding material of the present embodiment contains an epoxy resin, and a fibrous or acicular filler, and is configured such that

a cross-sectional area is equal to or more than 3 $cm^2$ and equal to or less than 100 $cm^2$, and
in a case where a specific gravity, a mass, and a volume, which are measured in accordance with JIS 6911:2006, are respectively denoted by G, M (g), and V ($cm^3$), a compression rate calculated from $[(M/G)/V] \times 100$ satisfies equal to or more than 70% and equal to or less than 95%.

According to the findings of the present inventors, it has been found that by appropriately reducing the compression rate of the tablet-shaped epoxy resin molding material, a molded body having excellent fracture toughness can be molded.

Although the detailed mechanism is not clear, it is presumed that the fact that the tablet has a moderately low compression rate indicates that, that is, the tablet was formed under mild conditions, but since the fiber length of the fibrous or acicular filler can be suppressed from being shortened during the molding process of the tablet under mild conditions, the decrease in the fracture toughness of the molded body can be prevented.

The upper limit of the compression rate is equal to or less than 95%, preferably equal to or less than 94%, and more preferably equal to or less than 93%. As a result, a molded body having excellent fracture toughness can be molded. In addition, a mechanical strength such as a flexural modulus can be improved.

Meanwhile, the lower limit of the compression rate is, for example, equal to or more than 70%, preferably equal to or more than 75%, and more preferably equal to or more than 80%. As a result, the damageability of the molded body during transportation can be suppressed from decreasing.

Examples of the transportation include air transportation, land transportation, and marine transportation.

In the present embodiment, the compression rate can be controlled by, for example, appropriately selecting the type and the blending amount of each component contained in the epoxy resin molding material, the method for preparing the epoxy resin molding material, and the like. Among these, for example, as production conditions, controlling the molding pressure and the compression time during molding, increasing the fiber length of the fiber filler, and the like are exemplified as elements for setting the compression rate within a desired numerical range.

Such an epoxy resin molding material can be used for any one of magnet fixing, electronic control unit (ECU) encapsulation, coil encapsulation, stator core encapsulation, or the like. Specifically, the tablet-shaped epoxy resin molding material can be utilized for magnet fixing, electronic control unit (ECU) encapsulation, coil encapsulation, or stator core encapsulation by a known molding method.

In each of such applications, the mechanical characteristics of the molded body, such as the flexural modulus, can be improved. In addition, in a rotor core having a skew structure, the occurrence of a gap in a case where a material for magnet fixing is filled can be suppressed.

The columnar tablet of the present embodiment is a columnar molded body obtained by molding the above-described epoxy resin molding material.

The method for producing a tablet-shaped epoxy resin molding material may include, for example, as an extrusion molding method, a step of melt-kneading an epoxy resin composition containing at least an epoxy resin and a fibrous or acicular filler to obtain an epoxy resin molding material, and a step of obtaining a tablet using the obtained epoxy resin molding material.

A known method can be used as the method of obtaining a tablet, but for example, a powder or granular epoxy resin composition may be subjected to tablet molding into a tablet using a tablet molding machine. The method is not limited to this molding method, and a method of cutting the epoxy resin molding material while continuously extruding the molten epoxy resin molding material through an opening part at the extruder tip, to obtain a tablet, may be used.

The powder or granular epoxy resin composition includes powder and/or granules. For example, relatively fine particles (powder) are obtained by subjecting relatively coarse particles (granules) to a pulverization treatment and/or a

classification treatment.

The particle shape of the epoxy resin composition is not particularly limited, and may be a spherical shape, a polygonal shape, an irregular shape, or the like. These may be used alone or in combination of two or more kinds thereof.

The volume of the tablet-shaped epoxy resin molding material (tablet) is, for example, equal to or more than 5 $cm^3$ and equal to or less than 1500 $cm^3$, and preferably equal to or more than 10 $cm^3$ and equal to or less than 1000 $cm^3$.

The cross-sectional area of the columnar tablet is, for example, equal to or more than 3 $cm^2$ and equal to or less than 100 $cm^2$, and preferably equal to or more than 10 $cm^2$ and equal to or less than 95 $cm^2$.

The length of the columnar tablet is, for example, equal to or more than 10 mm and equal to or less than 300 mm, and preferably equal to or more than 20 mm and equal to or less than 200 mm.

By using a known molding method such as transfer molding using the tablet-shaped epoxy resin molding material, any fixing structure or encapsulation structure selected from the group consisting of a magnet fixing structure, an electronic control unit encapsulation structure, a coil encapsulation structure, and a stator core encapsulation structure as illustrated below can be produced.

Regarding the above-described fixing structure or encapsulation structure, for example, International Publication No. WO 2012/029278 and the like may be referred to for a rotor core to which a magnet is fixed, for example, International Publication No. WO 2016/139985 and the like may be referred to for an electronic control unit for in-vehicle use, and Japanese Unexamined Patent Publication No. 2020-094092 and the like may be referred to for a stator core.

A case in which the epoxy resin molding material is used for the above-described magnet fixing structure will be described.

A rotor core includes a plurality of hole parts and permanent magnets individually inserted into the plurality of hole parts. By filling the epoxy resin molding material in between this hole part and the permanent magnet, the permanent magnet can be fixed to the rotor core.

A case in which the epoxy resin molding material is used for an in-vehicle electronic control unit encapsulation structure will be described.

An in-vehicle electronic control unit includes a substrate on which electronic components and the like are mounted. In the in-vehicle electronic control unit, at least a portion of the substrate together with the electronic components can be encapsulated with the epoxy resin molding material.

A case in which the epoxy resin molding material is used for a coil encapsulation structure will be described.

A coil includes a wound wire such as a copper wire, and is used for a motor, a transformer, and the like. This coil is molded (encapsulated) with the epoxy resin molding material due to insulation properties.

A case in which the epoxy resin molding material is used for a stator core encapsulation structure will be described.

A stator core includes a plurality of tooth parts and coils (wound wires) individually wound around the plurality of tooth parts.

By encapsulating the coil wound around this tooth part using the epoxy resin molding material, the coil and the stator core can be insulated. Furthermore, in a case where the tooth part formed in the stator core has an accommodation part, the coil and the stator core can be insulated by accommodating the coil wound around the tooth part in the accommodation part, and filling the space between the coil and the accommodation part with the epoxy resin molding material.

Furthermore, as an example of production, an insulating layer is formed on the surface of the stator core using the epoxy resin molding material. Thereafter, a method of inserting a coil into the tooth part and encapsulating this coil using the epoxy resin molding material, can be used.

The wound wire that can be used for the above-described coil or stator core, may be made of a round wire or a rectangular wire.

The step of producing a fixing structure or an encapsulation structure may be carried out, for example, using a tablet-shaped epoxy resin molding material at a temperature of equal to or higher than 120°C and equal to or lower than 200°C and a pressure of equal to or higher than 3 MPa and equal to or lower than 15 MPa, and preferably at a temperature of 140°C to 180°C and a pressure of 5 to 12 MPa.

The lower limit of the spiral flow of the epoxy resin molding material is, for example, equal to or more than 30 cm, and preferably equal to or more than 50 cm.

On the other hand, the upper limit of the spiral flow of the epoxy resin molding material is, for example, equal to or less than 250 cm, and preferably equal to or less than 200 cm.

The spiral flow can be measured according to the following procedure.

Using a low-pressure transfer molding machine, the epoxy resin molding material is injected into a mold for spiral flow measurement according to EMMI-1-66 under conditions of a mold temperature of 175°C, an injection pressure of 6.9 MPa, and a curing time of 120 seconds, and the flow length (cm) is measured.

The method for producing a tablet using the epoxy resin molding material of the present embodiment is not limited to the compression molding method, and an extrusion molding method, a transfer molding method, an injection molding

method, or the like may be used.

Hereinafter, each component of the epoxy resin molding material of the present embodiment will be described in detail.

[Epoxy Resin]

The epoxy resin molding material contains an epoxy resin.

Examples of the epoxy resin include phenol resins, including novolac type phenol resins such as a phenol novolac resin, a cresol novolac resin, and a bisphenol A novolac resin, and resol type phenol resins; epoxy resins, including novolac type epoxy resins such as a phenol novolac type epoxy resin and a cresol novolac type epoxy resin, bisphenol type epoxy resins such as a bisphenol A type epoxy resin and a bisphenol F type epoxy resin, aromatic glycidyl amine type epoxy resins such as N,N-diglycidyl aniline, N,N-diglycidyl toluidine, diaminodiphenylmethane type glycidyl amine, and aminophenol type glycidyl amine, hydroquinone type epoxy resins, biphenyl type epoxy resins, stilbene type epoxy resins, triphenolmethane type epoxy resins, triphenolpropane type epoxy resins, alkyl-modified triphenolmethane type epoxy resins, triazine nucleus-containing epoxy resins, dicyclopentadiene-modified phenol type epoxy resins, naphthol type epoxy resins, naphthalene type epoxy resins, and aralkyl type epoxy resins such as a phenol aralkyl type epoxy resin having a phenylene and/or biphenylene skeleton and a naphthol aralkyl type epoxy resin having a phenylene and/or biphenylene skeleton; and aliphatic epoxy resins, including alicyclic epoxies such as vinyl cyclohexene dioxide, dicyclopentadiene oxide, and alicyclic diepoxy-adipade. These may be used singly or as mixtures of two or more kinds thereof.

Among these, it is preferable that the epoxy resin includes a cresol novolac type epoxy resin and/or a bisphenol A type epoxy resin.

The content of the epoxy resin is preferably equal to or more than 5% by mass and equal to or less than 40% by mass, and more preferably equal to or more than 10% by mass and equal to or less than 20% by mass, with respect to the total amount of the epoxy resin molding material.

[Curing Agent]

The epoxy resin molding material may contain a curing agent for curing an epoxy resin.

As the curing agent, for example, a phenol resin-based curing agent is preferably used. Examples of the phenol resin-based curing agent include novolac type resins such as a phenol novolac resin, a cresol novolac resin, and a naphthol novolac resin; polyfunctional phenol resins such as a triphenolmethane type phenol resin; modified phenol resins such as a terpene-modified phenol resin and a dicyclopentadiene-modified phenol resin; aralkyl type resins such as a phenol aralkyl resin having a phenylene skeleton and/or a biphenylene skeleton and a naphthol aralkyl resin having a phenylene and/or biphenylene skeleton; and bisphenol compounds such as bisphenol A and bisphenol F. Regarding these, one kind thereof may be used alone, or two or more kinds thereof may be used in combination. With such a phenol resin-based curing agent, the balance between flame resistance, moisture resistance, electrical characteristics, curability, storage stability, and the like is improved.

In addition, examples of the curing agent that can be used in combination include a polyaddition type curing agent and a condensation type curing agent.

Examples of the polyaddition type curing agent include polyamine compounds, including aliphatic polyamines such as diethylenetriamine (DETA), triethylenetetramine (TETA) and methaxylenediamine (MXDA), aromatic polyamines such as diaminodiphenylmethane (DDM), m-phenylenediamine (MPDA), and diaminodiphenylsulfone (DDS), dicyandiamide (DICY), and an organic acid dihydrazide; acid anhydrides, including alicyclic acid anhydrides such as hexahydrophthalic anhydride (HHPA) and methyltetrahydrophthalic anhydride (MTHPA), and aromatic acid anhydrides such as trimellitic anhydride (TMA), pyromellitic anhydride (PMDA), and benzophenonetetracarboxylic acid (BTDA); polyphenol compounds such as a novolac type phenol resin and a phenol polymer; polymercaptan compounds such as a polysulfide, a thioester, and a thioether; isocyanate compounds such as an isocyanate prepolymer and a blocked isocyanate; and organic acids such as a carboxylic acid-containing polyester resin.

Examples of the condensation type curing agent include a resol resin, a urea resin such as a methylol group-containing urea resin; and a melamine resin such as a methylol group-containing melamine resin.

Incidentally, it is preferable that the phenol resin as a curing agent and the epoxy resin are blended such that the equivalent ratio (EP)/(OH) between the number of epoxy groups (EP) in the epoxy resin molding material and the number of phenolic hydroxyl groups (OH) of all the phenol resins is equal to or more than 0.8 and equal to or less than 1.3. When the equivalent ratio is within the above-described range, sufficient curing characteristics can be obtained when molding the obtained epoxy resin molding material. However, when a resin other than a phenol resin, which can react with the epoxy resin, is used in combination, the equivalent ratio may be adjusted as appropriate.

[Inorganic Filler]

(Fibrous or Acicular Filler)

The epoxy resin molding material contains a fibrous or acicular filler as an inorganic filler.

The lower limit of the volume average fiber length of the fibrous or acicular filler is, for example, equal to or more than 5 μm, preferably equal to or more than 10 μm, more preferably equal to or more than 30 μm, and even more preferably equal to or more than 50 μm. In this manner, the strength of the material can be improved.

On the other hand, the upper limit of the volume average fiber length of the fibrous or acicular filler is, for example, equal to or less than 500 μm, preferably equal to or less than 450 μm, and more preferably equal to or less than 400 μm. In this manner, the moldability of the material can be improved.

When the volume average fiber length of the fibrous or acicular filler is denoted by L, and the number average fiber diameter of the fibrous or acicular filler is denoted by D, the aspect ratio is defined as L/D.

The lower limit of the L/D of the fibrous or acicular filler is, for example, equal to or more than 3, preferably equal to or more than 10, and more preferably equal to or more than 15. In this manner, the flexural modulus can be further improved. Furthermore, the toughness can be improved.

On the other hand, the upper limit of L/D of the fibrous or acicular filler is, for example, equal to or less than 100, preferably equal to or less than 70, and more preferably equal to or less than 50. In this manner, the moldability of the material can be improved.

(Measurement Procedure A for Volume Average Fiber Length)

The epoxy resin molding material is dissolved in acetone to remove the resin component, the insoluble components are dispersed on a glass plate, an image of the filler in the insoluble components is captured using an optical microscope, and the fiber length is measured using an image analyzer. An average value of the fiber lengths of 100 pieces of the filler that is based on a volume of fibers, starting from a longest fiber length, is defined as the volume average fiber length.

(Measurement Procedure B for Number Average Fiber Diameter)

Using a scanning electron microscope, one hundred transverse cross sections of the fibrous filler are measured from transverse cross sections of the epoxy resin molding material, and the average of the minimum diameters of the respective fiber cross-sections is defined as the number average fiber diameter.

The fibrous or acicular filler may include, for example, one or two or more selected from the group consisting of a wollastonite fiber, a glass fiber, a metal fiber, a carbon fiber, a fibrous aluminum oxide, an aramid fiber, a silicon carbide whisker, a silicon nitride whisker, and a potassium titanate whisker. Among these, it is preferable that the fibrous or acicular filler includes at least one of a wollastonite fiber and a glass fiber, and more preferably a wollastonite fiber.

The lower limit of the content of the fibrous or acicular filler is, for example, equal to or more than 5% by mass, preferably equal to or more than 10% by mass, and more preferably equal to or more than 30% by mass, in 100% by mass of the epoxy resin composition. In this manner, the flexural modulus can be further improved. Furthermore, the toughness can be improved.

On the other hand, the upper limit of the content of the fibrous or acicular filler may be, without being particularly limited, equal to or less than 80% by mass, and preferably equal to or less than 75% by mass, in 100% by mass of the epoxy resin composition.

Furthermore, the lower limit of the content of the fibrous or acicular filler in all the inorganic fillers is, for example, equal to or more than 30% by mass, preferably equal to or more than 40% by mass, and more preferably equal to or more than 50% by mass. In this manner, the flexural modulus can be further improved. Furthermore, the toughness can be improved.

On the other hand, the upper limit of the content of the fibrous or acicular filler in all the inorganic fillers is not particularly limited, but may be equal to or less than 100% by mass.

(Inorganic Filler Other Than Fibrous or Acicular Filler)

The epoxy resin molding material may contain an inorganic filler other than the fibrous or acicular filler.

The other inorganic filler is not particularly limited as long as it has a shape such as a spherical shape, a polygonal shape, or an irregular shape. Specifically, as the other inorganic filler, one having an aspect ratio of equal to or less than 2 is preferred, and a spherical one is more preferred.

Examples of the other inorganic filler include silica, alumina, kaolin, talc, clay, mica, rock wool, glass powder,

glass flakes, glass beads, silicon carbide, silicon nitride, aluminum nitride, carbon black, graphite, titanium dioxide, calcium carbonate, calcium sulfate, barium carbonate, magnesium carbonate, magnesium sulfate, and barium sulfate. These may be used alone or in combination of two or more kinds thereof.

As the silica, fused silica such as fused crushed silica and fused spherical silica, crystalline silica, and the like are used.

The average particle size $D_{50}$ of the inorganic filler is preferably equal to or more than 0.01 μm and equal to or less than 75 μm, and more preferably equal to or more than 0.05 μm and equal to or less than 50 μm. By setting the average particle size of the inorganic filler to be within the above-described range, the filling property in the mold is improved. Furthermore, by setting the upper limit value of the average particle size of the inorganic filler to be equal to or less than 75 μm, the filling property is further improved. The average particle size $D_{50}$ was defined as the volume-equivalent average particle size given by a laser diffraction type measuring apparatus, RODOS SR type (SYMPATEC HEROS & RODOS).

The content of the inorganic filler is preferably equal to or more than 50% by mass, more preferably equal to or more than 60% by mass, even more preferably equal to or more than 65% by mass, and particularly preferably equal to or more than 75% by mass, with respect to the total amount of the epoxy resin molding material.

On the other hand, the content of the inorganic filler is preferably equal to or less than 93% by mass, more preferably equal to or less than 91% by mass, and even more preferably equal to or less than 90% by mass, with respect to the total amount of the epoxy resin molding material.

Furthermore, when the inorganic filler is used in combination with an inorganic flame retardant, such as a metal hydroxide such as aluminum hydroxide or magnesium hydroxide, zinc borate, zinc molybdate, or antimony trioxide, it is desirable that the total amount of these inorganic flame retardants and the above-described inorganic filler is set to be within the range of the above-described content of the inorganic filler.

[Curing Catalyst]

The epoxy resin molding material may contain a curing catalyst, as necessary.

As the curing catalyst, it is preferable to use one or two or more selected from the group consisting of an amine-based catalyst and a phosphorus-based catalyst.

As the amine-based catalyst, for example, it is preferable to use imidazoles. Examples of the imidazoles can include one kind or two or more kinds selected from imidazole compounds such as imidazole, 2-methylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxyimidazole, 2-phenyl-4,5-dihydroxydimethylimidazole, and 2-phenyl-4-methyl-5-hydroxymethylimidazole; 1-cyanoethyl-2-undecylimidazolium trimellitate, 1-cyanoethyl-2-phenylimidazolium trimellitate, 2,4-diamino-6-[2'-methylimidazolyl(1')]-ethyl-s-triazine, 2,4-diamino-6-[2'-undecylimidazolyl(1')]-ethyl-s-triazine, 2,4-diamino-6-[2'-ethyl-4-methylimidazolyl(1')]-ethyl-s-triazine, isocyanuric acid adduct of 2,4-diamino-6-[2'-methylimidazolyl(1')]-ethyl-s-triazine, isocyanuric acid adduct of 2-phenylimidazole, isocyanuric acid adduct of 2-methylimidazole, and hexamethylenetetramine.

In a case where the curing catalyst includes an amine-based catalyst, the lower limit of the content of the amine-based catalyst is preferably equal to or more than 0.01% by mass, more preferably equal to or more than 0.03% by mass, and particularly preferably equal to or more than 0.05% by mass, with respect to the total amount of the epoxy resin molding material.

In addition, the upper limit of the content of the amine-based catalyst is preferably equal to or less than 2.0% by mass, more preferably equal to or less than 1.5% by mass, and particularly preferably equal to or less than 1.0% by mass, with respect to the total amount of the epoxy resin molding material.

Examples of the phosphorus-based catalyst include phosphorus atom-containing compounds such as an organic phosphine, a tetra-substituted phosphonium compound, a phosphobetaine compound, an adduct of a phosphine compound and a quinone compound, and an adduct of a phosphonium compound and a silane compound.

Examples of the organic phosphine that can be used for the epoxy resin molding material include primary phosphines such as ethylphosphine and phenylphosphine; secondary phosphines such as dimethylphosphine and diphenylphosphine; and tertiary phosphines such as trimethylphosphine, triethylphosphine, tributylphosphine, and triphenylphosphine.

Examples of the tetra-substituted phosphonium compound that can be used for the epoxy resin molding material include a compound represented by the following General Formula (4).

[Chem. 1]

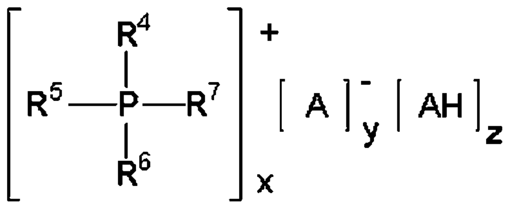

(4)

(In the above-described General Formula (4), P represents a phosphorus atom. $R^4$, $R^5$, $R^6$, and $R^7$ each represent an aromatic group or an alkyl group. A represents an anion of an aromatic organic acid having at least one group of any one functional group selected from a hydroxyl group, a carboxyl group, and a thiol group in the aromatic ring. AH represents an aromatic organic acid having at least one group of any one functional group selected from a hydroxyl group, a carboxyl group, and a thiol group in the aromatic ring. x and y are each a number of 1 to 3, z is a number of 0 to 3, and x = y.)

The compound represented by General Formula (4) is obtained, for example, as follows; however, the compound is not limited to this. First, a tetra-substituted phosphonium halide, an aromatic organic acid, and a base are mixed with an organic solvent, the mixture is uniformly mixed, and an aromatic organic acid anion is generated in the solution system. Next, when water is added thereto, a compound represented by General Formula (4) can be precipitated. In the compound represented by General Formula (4), $R^4$, $R^5$, $R^6$, and $R^7$, all of which are bonded to a phosphorus atom, are each preferably a phenyl group, AH is preferably a compound in which a hydroxyl group is bonded to an aromatic ring, that is, phenols, and A is preferably an anion of the phenols. Examples of the phenol include monocyclic phenols such as phenol, cresol, resorcin, and catechol; condensed polycyclic phenols such as naphthol, dihydroxynaphthalene, and anthraquinol; bisphenols such as bisphenol A, bisphenol F, and bisphenol S; and polycyclic phenols such as phenylphenol and biphenol.

Examples of the phosphobetaine compound used as the curing catalyst include a compound represented by the following General Formula (5).

[Chem. 2]

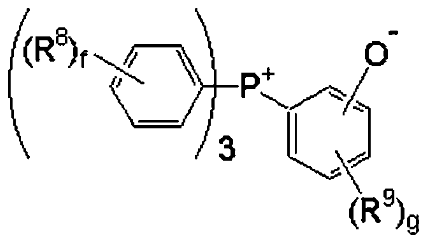

(5)

(In the above-described General Formula (5), $R^8$ represents an alkyl group having 1 to 3 carbon atoms, and $R^9$ represents a hydroxyl group. f is a number of 0 to 5, and g is a number of 0 to 3.)

The compound represented by General Formula (5) is obtained, for example, as follows. The compound is obtained through a step of first bringing a triaromatic-substituted phosphine, which is a tertiary phosphine, into contact with a diazonium salt and substituting the triaromatic-substituted phosphine with a diazonium group of the diazonium salt. However, the compound is not limited to this.

Examples of the adduct of a phosphine compound and a quinone compound, which is used as the curing catalyst, include a compound represented by the following General Formula (6).

[Chem. 3]

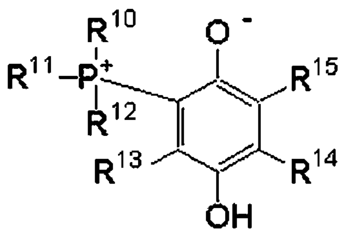

(6)

(In the above-described General Formula (6), P represents a phosphorus atom. $R^{10}$, $R^{11}$, and $R^{12}$ each represent an alkyl group having 1 to 12 carbon atoms or an aryl group having 6 to 12 carbon atoms, and they may be identical with or different from each other. $R^{13}$, $R^{14}$, and $R^{15}$ each represent a hydrogen atom or a hydrocarbon group having 1 to 12 carbon atoms and may be the same as or different from each other, or $R^{14}$ and $R^{15}$ may be bonded to form a cyclic structure.)

Regarding the phosphine compound that is used for the adduct of a phosphine compound and a quinone compound, for example, a compound in which the aromatic ring is unsubstituted or a substituent such as an alkyl group or an alkoxyl group is present in the aromatic ring, such as triphenylphosphine, a tris(alkylphenyl)phosphine, a tris(alkoxyphenyl)phosphine, trinaphthylphosphine, or tris(benzyl)phosphine, is preferred, and examples of the substituent such as an alkyl group or an alkoxyl group include those having 1 to 6 carbon atoms. Triphenylphosphine is preferred from the viewpoint of easy availability.

Furthermore, examples of the quinone compound that is used for the adduct of a phosphine compound and a quinone compound include benzoquinone and anthraquinones, and above all, p-benzoquinone is preferred from the viewpoint of storage stability.

Regarding a method for producing an adduct of a phosphine compound and a quinone compound, the adduct can be obtained by bringing an organic tertiary phosphine and a benzoquinone into contact with each other in a solvent in which both the compounds can be dissolved, and mixing the compounds. The solvent may be a solvent having low dissolvability for the adduct, among ketones such as acetone and methyl ethyl ketone. However, the compound is not limited to this.

The compound represented by General Formula (6), in which $R^{10}$, $R^{11}$, and $R^{12}$ bonded to a phosphorus atom are each preferably a phenyl group, and $R^{13}$, $R^{14}$, and $R^{15}$ are each preferably a hydrogen atom, that is, a compound produced by adding 1,4-benzoquinone to triphenylphosphine is preferable from the viewpoint that the compound decreases the elastic modulus during heating of a cured product of the epoxy resin molding material.

Examples of the adduct of a phosphonium compound and a silane compound, which is used as the curing catalyst, include a compound represented by the following General Formula (7).

[Chem. 4]

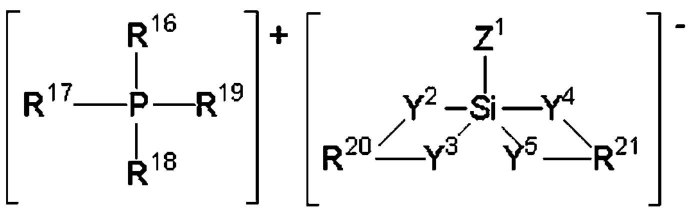

(7)

(In the above-described General Formula (7), P represents a phosphorus atom, and Si represents a silicon atom. $R^{16}$, $R^{17}$, $R^{18}$, and $R^{19}$ each represent an organic group having an aromatic ring or a heterocyclic ring, or an aliphatic group, and may be the same as or different from each other. In Formula, $R^{20}$ is an organic group which is bonded to groups $Y^2$ and $Y^3$. In Formula $R^{21}$ is an organic group which is bonded to groups $Y^4$ and $Y^5$. $Y^2$ and $Y^3$ each represent a group formed in a case where a proton-donating group releases a proton, in which the groups $Y^2$ and $Y^3$ in the same molecule are bonded to a silicon atom to form a chelate structure. $Y^4$ and $Y^5$ each represent a group formed in a case where a proton-donating group releases a proton, in which the groups $Y^4$ and $Y^5$ in the same molecule are bonded to a silicon atom to form a chelate structure. $R^{20}$ and $R^{21}$ may be the same as or different from each other, and the groups $Y^2$, $Y^3$, $Y^4$, and $Y^5$ may be the same as or different from each other. $Z^1$ is an organic group having an aromatic ring or a heterocyclic ring, or an aliphatic group.)

In General Formula (7), examples of $R^{16}$, $R^{17}$, $R^{18}$, and $R^{19}$ include a phenyl group, a methylphenyl group, a methoxyphenyl group, a hydroxyphenyl group, a naphthyl group, a hydroxynaphthyl group, a benzyl group, a methyl group, an ethyl group, an n-butyl group, an n-octyl group, and a cyclohexyl group, and among these, aromatic groups having a substituent such as an alkyl group, an alkoxy group, and a hydroxyl group, such as a phenyl group, a methylphenyl group, a methoxyphenyl group, a hydroxyphenyl group, and a hydroxynaphthyl group, or unsubstituted aromatic groups are more preferable.

Furthermore, in General Formula (7), $R^{20}$ is an organic group that is bonded to $Y^2$ and $Y^3$. Similarly, $R^{21}$ is an organic group which is bonded to groups $Y^4$ and $Y^5$. $Y^2$ and $Y^3$ are each a group formed in a case where a proton-donating group releases a proton, in which the groups $Y^2$ and $Y^3$ in the same molecule are bonded to a silicon atom to form a chelate structure. Similarly, $Y^4$ and $Y^5$ are each a group formed in a case where a proton-donating group releases a proton, in which the groups $Y^4$ and $Y^5$ in the same molecule are bonded to a silicon atom to form a chelate structure. The groups $R^{20}$ and $R^{21}$ may be the same as or different from each other, and the groups $Y^2$, $Y^3$, $Y^4$, and $Y^5$ may be the same as or different from each other. Such groups represented by $-Y^2-R^{20}-Y^3-$ and $-Y^4-R^{21}-Y^5-$ in General Formula (7) are each a group formed in a case where a proton donor releases two protons. As the proton donor, an organic acid having at least two carboxyl groups or hydroxyl groups in the molecule is preferable, an aromatic compound having at least two carboxyl groups or hydroxyl

groups in the adjacent carbons constituting the aromatic ring is even more preferable, and an aromatic compound having at least two hydroxyl groups in the adjacent carbons constituting the aromatic ring is more preferable. Examples thereof include catechol, pyrogallol, 1,2-dihydroxynaphthalene, 2,3-dihydroxynaphthalene, 2,2'-biphenol, 1,1'-bi-2-naphthol, salicylic acid, 1-hydroxy-2-naphthoic acid, 3-hydroxy-2-naphthoic acid, chloranilic acid, tannic acid, 2-hydroxybenzyl alcohol, 1,2-cyclohexanediol, 1,2-propanediol, and glycerin, but among these, catechol, 1,2-dihydroxynaphthalene, and 2,3-dihydroxynaphthalene are more preferable.

Furthermore, $Z^1$ in General Formula (7) represents an organic group having an aromatic ring or a heterocyclic ring, or an aliphatic group, and specific examples thereof include aliphatic hydrocarbon groups such as a methyl group, an ethyl group, a propyl group, a butyl group, a hexyl group, and an octyl group; aromatic hydrocarbon groups such as a phenyl group, a benzyl group, a naphthyl group, and a biphenyl group; glycidyloxy groups such as a glycidyloxypropyl group, a mercaptopropyl group, and an aminopropyl group; and reactive substituents such as a mercapto group, an alkyl group having an amino group, and a vinyl group, while among these, a methyl group, an ethyl group, a phenyl group, a naphthyl group, and a biphenyl group are more preferred from the viewpoint of thermal stability.

Regarding a method for producing an adduct of a phosphonium compound and a silane compound, a silane compound such as phenyltrimethoxysilane and a proton donor such as 2,3-dihydroxynaphthalene are introduced into a flask containing methanol and dissolved, and then a sodium methoxide-methanol solution is added dropwise thereto while being stirred at room temperature. When a solution prepared in advance, in which a tetra-substituted phosphonium halide such as tetraphenylphosphonium bromide is dissolved in methanol, is further added dropwise while being stirred at room temperature, crystals are precipitated. When the precipitated crystals are filtered, washed with water, and vacuum-dried, an adduct of a phosphonium compound and a silane compound is obtained. However, the method is not limited to this.

The content of the curing catalyst is preferably equal to or more than 0.05% by mass, more preferably equal to or more than 0.08% by mass, and particularly preferably equal to or more than 0.10% by mass, with respect to the total amount of the epoxy resin molding material. By setting the content of the curing catalyst to be equal to or greater than the above-described lower limit value, the curability of the epoxy resin molding material during transfer molding can be effectively improved. On the other hand, the content of the curing catalyst is preferably equal to or less than 2.0% by mass, more preferably equal to or less than 1.0% by mass, and particularly preferably equal to or less than 0.5% by mass, with respect to the total amount of the epoxy resin molding material. By setting the content of the curing catalyst to be equal to or less than the above-described upper limit value, the fluidity at the time of encapsulation can be enhanced, which can contribute to an enhancement of the filling property.

[Wax]

The epoxy resin molding material may contain a wax as a release agent, as necessary.

Examples of the wax include a natural wax such as carnauba wax, an ester wax, a montanic acid ester wax, a synthetic wax such as a polyethylene oxide wax, and a higher fatty acid such as zinc stearate and metal salts thereof.

The blending amount of the wax is, for example, equal to or more than 0.05% by mass and equal to or less than 2.0% by mass with respect to the total amount of the epoxy resin molding material. The lower limit value of the blending amount of the wax is preferably equal to or more than 0.1% by mass, and more preferably equal to or more than 0.2% by mass, with respect to the total amount of the epoxy resin molding material. The upper limit value of the blending amount of the wax is preferably equal to or less than 1.5% by mass, and more preferably equal to or less than 1.0% by mass, with respect to the total amount of the epoxy resin molding material. When the wax is blended in the above-described range, the obtained epoxy resin molding material has excellent fluidity and filling property during transfer molding.

[Coupling Agent]

The epoxy resin molding material may contain a coupling agent such as a silane coupling agent, as necessary.

Examples of the coupling agent include an epoxysilane, an aminosilane, a ureidosilane, and a mercaptosilane.

Examples of the epoxysilane include γ-glycidoxypropyltriethoxysilane, γ-glycidoxypropyltrimethoxysilane, γ-glycidoxypropylmethyldimethoxysilane, and β-(3,4-epoxycyclohexyl)ethyltrimethoxysilane. Examples of the aminosilane include γ-aminopropyltriethoxysilane, γ-aminopropyltrimethoxysilane, N-β-(aminoethyl)-γ-aminopropyltrimethoxysilane, N-β-(aminoethyl)-γ-aminopropylmethyldimethoxysilane, N-phenyl-γ-aminopropyltriethoxysilane, N-phenyl-γ-aminopropyltrimethoxysilane, N-β-(aminoethyl)-γ-aminopropyltriethoxysilane, N-6-(aminohexyl)-3-aminopropyltrimethoxysilane, and N-(3-(trimethoxysilylpropyl)-1,3-benzenedimethanane. Examples of the ureidosilane include γ-ureidopropyltriethoxysilane and hexamethyldisilazane. A latent aminosilane coupling agent having the primary amino moiety of aminosilane protected by reacting the primary amino moiety with a ketone or an aldehyde may also be used. Furthermore, the aminosilane may have a secondary amino group. Examples of the mercaptosilane include γ-mercaptopropyltrimethoxysilane and 3-mercaptopropylmethyldimethoxysilane, as well as a silane coupling agent that exhibits a function similar to that of a mercaptosilane coupling agent by thermal decomposition, such as bis(3-triethoxysilylpropyl) tetrasulfide or bis(3-triethoxysilylpropyl) disulfide. Furthermore, regarding these silane coupling agents, products that have been subjected to a hydrolysis reaction in advance may be blended. Regarding these silane coupling agents, one kind thereof may be used alone, or two or more kinds thereof may be used in combination.

From the viewpoint of continuous moldability, a mercaptosilane is preferred; from the viewpoint of fluidity, an aminosilane is preferred; and from the viewpoint of adhesion, an epoxysilane is preferred.

The lower limit value of the content of the coupling agent such as a silane coupling agent that can be used for the epoxy resin molding material is preferably equal to or more than 0.01% by mass, more preferably equal to or more than 0.05% by mass, and particularly preferably equal to or more than 0.1% by mass, with respect to the total amount of the epoxy resin molding material. When the lower limit value of the content of the coupling agent such as a silane coupling agent is within the above-described range, the interface strength between the epoxy resin and the inorganic filler is not decreased, and satisfactory vibration resistance can be obtained. The upper limit value of the content of the coupling agent such as a silane coupling agent is preferably equal to or less than 1% by mass, more preferably equal to or less than 0.8% by mass, and particularly preferably equal to or less than 0.6% by mass, with respect to the total amount of the epoxy resin molding material. When the upper limit value of the content of the coupling agent such as a silane coupling agent is within the above-described range, the interface strength between the epoxy resin and the inorganic filler is not decreased, and satisfactory vibration resistance can be obtained. Furthermore, when the content of the coupling agent such as a silane coupling agent is within the above-described range, the water absorbency of the cured product of the epoxy resin molding material is prevented from increasing.

[Other Additives]

The epoxy resin molding material of the present embodiment may further contain other additives such as a colorant, a flame retardant, a low stress agent, and an adhesion aid, as necessary, in addition to the above-described components. These may be used alone or in combination of two or more kinds thereof.

Embodiments of the present invention are described above, but these are merely examples of the present invention and it is possible to adopt various configurations other than the configurations described above. In addition, the present invention is not limited to the above-described embodiments and modifications, improvements, and the like within a range in which it is possible to achieve the object of the present invention are included in the present invention.

Examples

A detailed description will be given of the present invention below with reference to Examples, but the present invention is not limited by the description of these Examples.

(Examples 1 to 3 and Comparative Examples 1 and 2)

<Production of Tablet-Shaped Epoxy Resin Molding Material>

A material mixture obtained by blending each of the components according to the blending amount shown in the following Table 1 was kneaded with a heating roll and cooled in a sheet shape, and the cooled material was pulverized to obtain a granular epoxy resin composition.

The kneading conditions for the heating roll were set to a rotation speed of 20 rpm, a temperature of 120°C, and a kneading time of 5 to 10 minutes.

The details of each component in Table 1 for the raw material of the epoxy resin composition are as follows.

· Fibrous or acicular filler: Glass fiber (manufactured by Nitto Boseki Co., Ltd., CS3E479)
· Other inorganic filler: Crushed silica (manufactured by TATSUMORI LTD, RD-8)
· Colorant: Carbon black
· Epoxy resin: Novolac type epoxy resin (manufactured by DIC Corporation, N680)
· Curing agent: Phenol novolac resin 1 (manufactured by Sumitomo Bakelite Co., Ltd., PR51470)
· Curing agent: Phenol novolac resin 2 (manufactured by Sumitomo Bakelite Co., Ltd., PR51714)
· Curing catalyst: Amine-based catalyst (manufactured by SHIKOKU CHEMICALS CORPORATION, 2PZ-PW)
· Wax: Carnauba wax
· Wax: Calcium stearate
Low stress agent: Organic modified silicone oil (manufactured by Dow Inc., FZ-3730)
· Adhesion aid: Triazine compound (manufactured by SHIKOKU CHEMICALS CORPORATION, VD-5)

The epoxy resin composition obtained above was subjected to tablet molding using a tablet machine (BARPRESS manufactured by KIKUSUI SEISAKUSHO LTD.) under conditions of the molding pressure and the compression time shown in Table 2 to obtain a tablet having a weight of 8 g, a tablet diameter of 14 mm, and a tablet height of 29 mm.

As described above, the tablet-shaped epoxy resin molding materials (tablets) having different compression rates of Examples 1 to 3 and Comparative Examples 1 and 2 were produced.

<Compression Rate>

For the obtained tablet-shaped epoxy resin molding material, the specific gravity G, the mass M (g), and the volume V ($cm^3$) were measured in accordance with JIS 6911:2006. Using the measured G, M, and V, the compression rate (%) was calculated by the expression: $[(M/G)/V] \times 100$. The results are listed in Table 2.

<Volume Average Fiber Length>

The epoxy resin molding material was dissolved in acetone to remove the resin component, the insoluble components were dispersed on a glass plate, an image of the filler in the insoluble components was captured using an optical microscope, and the fiber length was measured using an image analyzer. An average value of the fiber lengths of 100 pieces of the filler that is based on a volume of fibers and defined by the following equation, starting from a longest fiber length, was defined as the number average fiber length (μm). The results are listed in Table 2.

$$Lv = \Sigma(L \times v)/\Sigma v$$

Σ denotes a set, L denotes the length of each fiber, and v denotes the volume of each fiber.

[Table 1]

Table 1

| | | Unit | |
|---|---|---|---|
| Inorganic filler | Fibrous or acicular filler | % by mass | 9.8 |
| | Other inorganic filler | | 59.28 |
| Colorant | Carbon black | | 0.73 |
| Epoxy resin | Novolac type epoxy resin | | 15.6 |
| Curing agent | Phenol novolac resin 1 | | 9.8 |
| | Phenol novolac resin 2 | | 0.98 |
| Curing catalyst | Amine-based catalyst | | 0.98 |
| Wax | Montanic acid wax | | 0.39 |
| | Calcium stearate | | 0.39 |
| Low stress agent | Nitrile rubber | | 2 |
| Adhesion aid | Organic triazole compound | | 0.05 |
| Total | | | 100 |

The obtained epoxy resin composition and tablet-shaped epoxy resin molding material were evaluated for the following items.

[Table 2]

Table 2

| | | Unit | Comparative Example 1 | Example 1 | Example 2 | Example 3 | Comparative Example 2 |
|---|---|---|---|---|---|---|---|
| Tablet molding condition | Molding pressure | Ton | 20 | 40 | 50 | 60 | 70 |
| | Compression time | Seconds | 5 | 5 | 5 | 5 | 5 |
| | Compression rate | % | 70 | 80 | 85 | 92 | 96 |
| Evaluation | Spiral flow | cm | 23 | 22 | 25 | 27 | 28 |
| | Volume average fiber length in tablet | μm | 240 | 239 | 247 | 188 | 143 |
| | Bending strength | MPa | 154 | 152 | 150 | 140 | 133 |
| | Bending strength | GPa | 15.9 | 14.9 | 15.1 | 14.0 | 13.5 |
| | K1c | - | 1.0 | 1.0 | 1.0 | 0.9 | 0.7 |
| | Damageability during transportation | - | Poor | Good | Good | Good | Good |

<Spiral Flow>

Using a low-pressure transfer molding machine (manufactured by KOHTAKI Corporation, KTS-15), the obtained epoxy resin composition was injected into a mold for spiral flow measurement according to EMMI-1-66 under the conditions of a mold temperature of 175°C, an injection pressure of 6.9 MPa, and a pressure retention time of 120 seconds, and a flow length was measured.

<Bending Test: Flexural Modulus>

The obtained tablet was subjected to injection molding using a transfer molding machine under conditions of a mold temperature of 175°C, an injection pressure of 9.8 MPa, and a curing time of 120 seconds, and a test piece was obtained as a cured product having a width of 10 mm × a thickness of 4 mm × a length of 80 mm.

The flexural modulus (GPa) of the obtained test piece at room temperature was measured according to JIS K 6911.

<K1c>

According to a KIc method standardized in ASTM D5045-14, the obtained tablet-shaped epoxy resin molding material (columnar tablet) was adjusted to a size of a length of 50 mm, a width B of 5 mm, and a thickness W of 10 mm, a notch having a depth of 3.5 mm in a thickness direction was formed in a central part in the length direction, and the obtained molded body was cured at 175°C for 4 hours to obtain a cured product. In addition, a scratch having a depth of 0.1 mm in the thickness direction was made with a razor on the notch tip portion of the cured product, and a test piece having a total crack length a = 3.6 mm was produced.

Subsequently, as shown in the outline of FIG. 1, a three-point bending test was performed on the obtained test piece 10 using a tensile compression tester (STB-1225S type Tensilon manufactured by ORIENTEC CO., LTD.) at a measurement temperature of 25°C, a speed of 10 mm/min, and a distance S between fulcrums of 40 mm, and a fracture toughness value (K1c ($MPa\cdot m^{1/2}$)) was calculated based on the following expression. In the following expression, $P_Q$ is a maximum load (N). The tensile compression tester in FIG. 1 includes a loading pin 12 having a diameter of 10 mm and two R-processed round fulcrums 14.

$$KI_C = ((P_Q \times S)/(B \times W^{3/2})) \times f(a/W)$$

provided that $f(a/W) = (3(a/W)^{1/2}[1.99 - (a/W)(1 - a/W)\{2.15 - 3.9(a/W) + 2.7(a/W)^2\}])/(2\{1 + 2(a/W)\}\{1 - (a/W)\}^{3/2})$.

In a case where the fracture toughness value of Comparative Example 1 calculated as described above was standardized to 1.0, relative values of the fracture toughness values of Examples 1 to 3 and Comparative Examples 1 and 2 are shown in Table 2.

<Evaluation of Damageability during Transportation>

The damageability during transportation was evaluated as follows.

A plurality of the obtained tablets were accommodated in a box, and a transport experiment was performed in this state, in which a predetermined vibration was applied for a predetermined time. The height of the tablet before and after the transport experiment was measured with a caliper, and in a case where the standard deviation of the tablet height after the transportation was within 20% of the average value of the tablet heights before the transportation (immediately after molding), it was determined that the damage during the transportation was small and the damageability during transportation was good, and in a case where the standard deviation of the tablet height after the transportation exceeded 20%, it was determined that the damageability during transportation was poor.

From the above results, the epoxy resin molding materials of Examples 1 to 3 showed results with good damageability during transportation as compared with Comparative Example 1. In addition, it was found that the epoxy resin molding materials of Examples 1 to 3 had higher levels of both fracture toughness and mechanical strength as compared with Comparative Example 2.

Such epoxy resin molding materials of Examples 1 to 3 can be suitably used for magnet fixing, electronic control unit encapsulation, coil encapsulation, or stator core encapsulation.

This application claims priority based on Japanese Patent Application No. 2024-058574 filed on April 1, 2024, the entire disclosure of which is incorporated herein by reference.

REFERENCE SIGNS LIST

10 test piece
12 loading pin
14 round fulcrum

**Claims**

**1.** A tablet-shaped epoxy resin molding material comprising:

an epoxy resin; and
a fibrous or acicular filler,
wherein a cross-sectional area is equal to or more than 3 $cm^2$ and equal to or less than 100 $cm^2$, and
in a case where a specific gravity, a mass, and a volume of the tablet-shaped epoxy resin molding material, which are measured in accordance with JIS 6911:2006, are respectively denoted by G, M (g), and V ($cm^3$), a compression rate calculated from $[(M/G)/V] \times 100$ is equal to or more than 70% and equal to or less than 95%.

**2.** The tablet-shaped epoxy resin molding material according to Claim 1,

wherein a volume average fiber length of the fibrous or acicular filler, which is measured by the following procedure A, is equal to or more than 5 $\mu$m and equal to or less than 500 $\mu$m,
(procedure A)
the tablet-shaped epoxy resin molding material is dissolved in acetone to remove a resin component, subsequently insoluble components are dispersed on a glass plate, an image of the filler in the insoluble components is captured using an optical microscope, and a fiber length is measured using an image analyzer; and
an average value of fiber lengths of 100 pieces of the filler that is based on a volume of fibers, starting from a longest fiber length, is defined as the volume average fiber length.

**3.** The tablet-shaped epoxy resin molding material according to Claim 1 or 2,

wherein in a case where a volume average fiber length of the fibrous or acicular filler, which is measured by the following procedure A, is denoted by L and a number average fiber diameter of the fibrous or acicular filler, which is

measured by the following procedure B, is denoted by D,
L/D is equal to or more than 3 and equal to or less than 100,
(procedure A)
the tablet-shaped epoxy resin molding material is dissolved in acetone to remove a resin component, subsequently insoluble components are dispersed on a glass plate, an image of the filler in the insoluble components is captured using an optical microscope, and a fiber length is measured using an image analyzer; and
an average value of fiber lengths of 100 pieces of the filler that is based on a volume of fibers, starting from a longest fiber length, is defined as the volume average fiber length,
(procedure B)
100 transverse cross sections of the fibrous filler are measured from a transverse cross section of the tablet-shaped epoxy resin molding material using a scanning electron microscope, and an average of minimum diameters of respective fiber cross-sections is defined as the number average fiber diameter.

**4.** The tablet-shaped epoxy resin molding material according to Claim 1 or 2,
wherein the fibrous or acicular filler includes one or two or more selected from the group consisting of a wollastonite fiber, a glass fiber, a metal fiber, a carbon fiber, fibrous aluminum oxide, an aramid fiber, a silicon carbide whisker, a silicon nitride whisker, and a potassium titanate whisker.

**5.** The tablet-shaped epoxy resin molding material according to Claim 1 or 2,

wherein a spiral flow measured according to the following procedure is equal to or more than 20 cm,
(procedure)
the tablet-shaped epoxy resin molding material is injected into a mold for spiral flow measurement according to EMMI-1-66 using a low-pressure transfer molding machine under conditions of a mold temperature of 175°C, an injection pressure of 6.9 MPa, and a curing time of 120 seconds, and a flow length (cm) is measured.

**6.** The tablet-shaped epoxy resin molding material according to Claim 1 or 2,
wherein a content of the fibrous or acicular filler is equal to or more than 5% by mass and equal to or less than 80% by mass in 100% by mass of the tablet-shaped epoxy resin molding material.

**7.** The tablet-shaped epoxy resin molding material according to Claim 1 or 2,
wherein the epoxy resin includes a cresol novolac type epoxy resin and/or a bisphenol A type epoxy resin.

**8.** The tablet-shaped epoxy resin molding material according to Claim 1 or 2, further comprising:
one or two or more curing catalysts selected from the group consisting of an amine-based catalyst and a phosphorus-based catalyst.

**9.** The tablet-shaped epoxy resin molding material according to Claim 1 or 2,
wherein the volume of the tablet-shaped epoxy resin molding material is equal to or more than 5 $cm^3$ and equal to or less than 1500 $cm^3$.

**10.** The tablet-shaped epoxy resin molding material according to Claim 1 or 2,
wherein the tablet-shaped epoxy resin molding material is used for any one of magnet fixing, electronic control unit encapsulation, coil encapsulation, or stator core encapsulation.

**11.** A columnar tablet which is molded from the tablet-shaped epoxy resin molding material according to Claim 1 or 2.

**12.** A method for producing a columnar tablet, the method comprising:

a step of melt-kneading an epoxy resin composition containing an epoxy resin and a fibrous or acicular filler to obtain an epoxy resin molding material; and
a step of obtaining a columnar tablet using the obtained epoxy resin molding material,
wherein a cross-sectional area of the columnar tablet is equal to or more than 3 $cm^2$ and equal to or less than 100 $cm^2$, and
in a case where a specific gravity, a mass, and a volume of the columnar tablet, which are measured in accordance with JIS 6911:2006, are respectively denoted by G, M (g), and V ($cm^3$), a compression rate calculated from $[(M/G)/V] \times 100$ is equal to or more than 70% and equal to or less than 95%.

FIG. 1

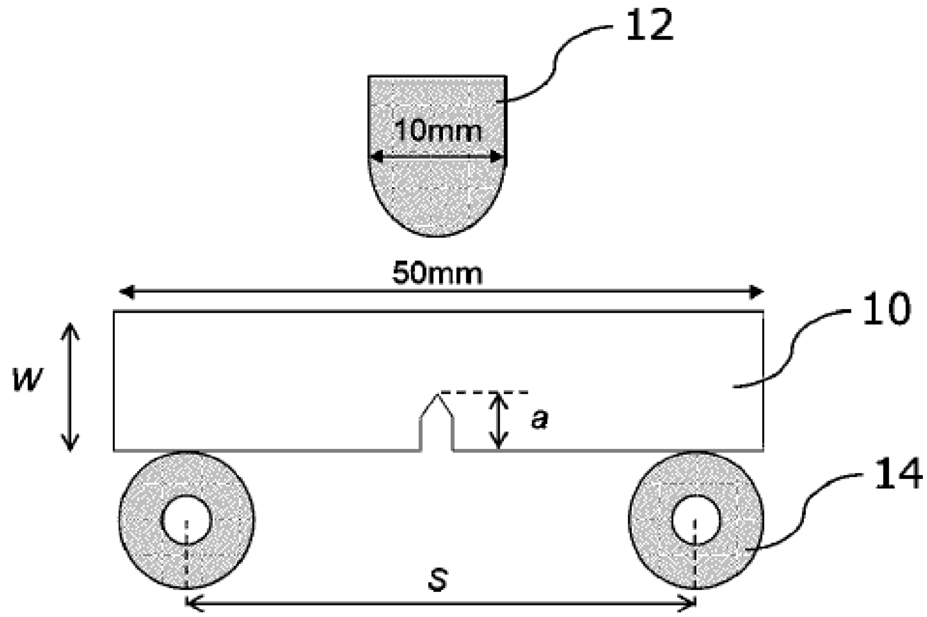

## INTERNATIONAL SEARCH REPORT

International application No. **PCT/JP2025/010687**

### A. CLASSIFICATION OF SUBJECT MATTER

***C08J 3/12***(2006.01)i; ***C08G 59/68***(2006.01)i; ***C08K 7/02***(2006.01)i; ***C08L 63/00***(2006.01)i
FI: C08J3/12 Z CFC; C08L63/00 C; C08K7/02; C08G59/68

According to International Patent Classification (IPC) or to both national classification and IPC

### B. FIELDS SEARCHED

Minimum documentation searched (classification system followed by classification symbols)

C08J3/12; B29B9/08; C08J5/00-5/24; C08G59/00-59/72; C08K3/00-13/08; C08L1/00-101/14; H01L21/56; B29C45/02

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2023-149827 A (SUMITOMO BAKELITE CO., LTD.) 16 October 2023 (2023-10-16) entire text, in particular, claims, paragraphs [0024]-[0038], [0078]-[0098] | 1, 4, 7-12 |
| X | WO 2019/106813 A1 (HITACHI CHEMICAL COMPANY, LTD.) 06 June 2019 (2019-06-06) entire text, in particular, claims, paragraphs [0029], [0052], [0058]-[0059], [0063]-[0076] | 1, 5, 7, 9-12 |
| Y | JP 2021-024173 A (SUMITOMO BAKELITE CO., LTD.) 22 February 2021 (2021-02-22) entire text, in particular, claims, paragraphs [0020]-[0024], [0043]-[0061], fig. 2, 3 | 1, 4, 6, 9, 10 |
| Y | JP 2004-050608 A (HITACHI CHEMICAL CO., LTD.) 19 February 2004 (2004-02-19) entire text, in particular, claims, paragraphs [0016], [0029] | 1, 4, 6, 9, 10 |
| Y | JP 2023-138440 A (NITTO DENKO CORPORATION) 02 October 2023 (2023-10-02) entire text, in particular, claims, paragraph [0095] | 1, 4, 6, 9, 10 |
| Y | JP 2013-001893 A (SUMITOMO BAKELITE CO., LTD.) 07 January 2013 (2013-01-07) entire text, in particular, claims, paragraph [0136] | 1, 4, 6, 9, 10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2025** | **17 June 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2025/010687**

**C. DOCUMENTS CONSIDERED TO BE RELEVANT**

| Category* | Citation of document, with indication, where appropriate, of the relevant passages | Relevant to claim No. |
|---|---|---|
| Y | JP 2019-176023 A (KYOCERA CORPORATION) 10 October 2019 (2019-10-10) entire text, in particular, claims, paragraph [0028] | 1, 4, 6, 9, 10 |
| A | JP 2016-207699 A (KANEKA CORP.) 08 December 2016 (2016-12-08) entire text | 1-12 |
| A | JP 2022-116173 A (SHOWA DENKO MATERIALS CO., LTD.) 09 August 2022 (2022-08-09) entire text | 1-12 |
| A | JP 2017-119874 A (KANEKA CORP.) 06 July 2017 (2017-07-06) entire text, in particular, paragraph [0318] | 1-12 |
| P, A | WO 2024/225223 A1 (SUMITOMO BAKELITE CO., LTD.) 31 October 2024 (2024-10-31) entire text | 1-12 |

Form PCT/ISA/210 (second sheet) (July 2022)

**INTERNATIONAL SEARCH REPORT**
**Information on patent family members**

International application No.
**PCT/JP2025/010687**

| Patent document cited in search report | Publication date (day/month/year) | Patent family member(s) | Publication date (day/month/year) |
|---|---|---|---|
| JP 2023-149827 A | 16 October 2023 | (Family: none) | |
| WO 2019/106813 A1 | 06 June 2019 | US 2020/0385566 A1<br>entire text, in particular, claims, paragraphs [0035], [0066], [0073]-[0074], [0083]-[0099]<br>EP 3719050 A1<br>CN 111386295 A | |
| JP 2021-024173 A | 22 February 2021 | (Family: none) | |
| JP 2004-050608 A | 19 February 2004 | (Family: none) | |
| JP 2023-138440 A | 02 October 2023 | WO 2023/176820 A1<br>CN 118715282 A<br>KR 10-2024-0160215 A | |
| JP 2013-001893 A | 07 January 2013 | (Family: none) | |
| JP 2019-176023 A | 10 October 2019 | (Family: none) | |
| JP 2016-207699 A | 08 December 2016 | (Family: none) | |
| JP 2022-116173 A | 09 August 2022 | US 2020/0385566 A1<br>entire text<br>WO 2019/106813 A1<br>EP 3719050 A1<br>CN 111386295 A | |
| JP 2017-119874 A | 06 July 2017 | (Family: none) | |
| WO 2024/225223 A1 | 31 October 2024 | JP 2024-156625 A<br>JP 2024-156626 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H9208805 A
- WO 2012029278 A
- WO 2016139985 A
- JP 2020094092 A
- JP 2024058574 A